# EUROPEAN PATENT SPECIFICATION

(11) **EP 2 481 784 B1**
(45) Date of publication and mention of the grant of the patent: **18.09.2013**
(21) Application number: 11010289.4
(22) Date of filing: 29.12.2011
(51) Int. Cl.: C09J 7/02

(54) **Laminate for nonaqueous battery**
Schichtstoff für eine nichtwässrige Batterie
Stratifié pour batterie non aqueuse

(30) Priority: 27.01.2011 JP 2011014720
(43) Date of publication of application: 01.08.2012
(73) Proprietor: Nitto Denko Corporation, Ibaraki-shi, Osaka 567-8680 (JP)
(72) Inventor: Ikishima, Shinsuke, Ibaraki-shi Osaka 567-8680 (JP); Nakanishi, Tadatoshi, Ibaraki-shi Osaka 567-8680 (JP); Takeda, Kouhei, Ibaraki-shi Osaka 567-8680 (JP); Shintani, Toshio, Ibaraki-shi Osaka 567-8680 (JP)
(74) Representative: Müller-Boré & Partner Patentanwälte

(56) References cited:
- WO-A1-2010/141248
- DE-A1-102008 025 982
- DATABASE WPI Week 200252 Thomson Scientific, London, GB; AN 2002-482548 XP002670824, & JP 2002 075297 A (MITSUBISHI CHEM CORP) 15 March 2002 (2002-03-15)

## Description

The present invention relates to a laminate for a nonaqueous battery that can be used upon, for example, production of a nonaqueous battery, and more specifically, to a laminate for a nonaqueous battery that can be used for a site to be immersed in an electrolytic solution in a nonaqueous battery, a site to be brought into contact with the electrolytic solution, or the like.

A nonaqueous battery in which a nonaqueous electrolytic solution is sealed such as a lithium ion battery has become extremely useful as a power source for a mobile instrument such as a mobile phone or a notebook personal computer. The nonaqueous battery such as a lithium ion battery has been largely expected to serve as a battery for an electric vehicle as well because of its high capacity and light weight. It is predicted that an additional increase in capacity and an additional reduction in weight are requested of the nonaqueous battery such as a lithium ion battery in the future.

An adherent laminate is used in the nonaqueous battery in which the nonaqueous electrolytic solution is sealed for improving the suitability of electrodes to be packed into a battery case and for preventing a short circuit between the electrodes caused by the penetration of a burr or the like present on an electrode plate through a separator.

An adherent laminate using an acrylic pressure-sensitive adhesive layer or a naturalrubber-based pressure-sensitive adhesive layer as a pressure-sensitive adhesive layer has been known as the adherent laminate to be used in the nonaqueous battery in which the nonaqueous electrolytic solution is sealed (Japanese Patent Application Laid-open No. Hei 10-247489). However, the adherent laminate using the pressure-sensitive adhesive layer involves the following problems. Its adhesion reduces in the nonaqueous electrolytic solution, or a component for constructing the pressure-sensitive adhesive layer is eluted in the nonaqueous electrolytic solution and reacts with an electrode or the like to deteriorate the nonaqueous electrolytic solution.

A possible approach to suppressing the reduction of the adhesion of the adherent laminate in the nonaqueous electrolytic solution is to use an adherent laminate having high pressure-sensitive adhesiveness. However, the adherent laminate having high pressure-sensitive adhesiveness involves the following problems. The laminate is poor in workability because it is difficult to release and attach the laminate again even when a positional shift occurs upon its attachment to an adherend. Further, the laminate is uneconomical because the laminate is discarded at a high rate. Although a general approach to suppressing the reduction of the adhesion is to add a tackifier, the tackifier involves the following problem. The tackifier is readily eluted in the nonaqueous electrolytic solution to deteriorate the nonaqueous electrolytic solution.

An adherent laminate obtained by forming a pressure-sensitive adhesive layer formed of a polyisobutylene rubber and a saturated hydrocarbon on a base material film stable toward a nonaqueous electrolytic solution has been known as an adherent laminate to be used in a nonaqueous battery capable of maintaining a high level of output by suppressing the deterioration of the nonaqueous electrolytic solution (Japanese Patent Application Laid-open No. Hei 9-16557).

However, its cohesive strength is not sufficient because the pressure-sensitive adhesive layer of such adherent laminate is not subjected to any cross-linking treatment. As a result, the squeeze-out of the pressure-sensitive adhesive layer when the laminate is used in the form of a tape may occur. Accordingly, the following problems arise. Side surfaces of the adherent laminate adhere to each other, or the contamination of an attaching apparatus or a battery component occurs.

An object of the present invention is to provide a laminate for a nonaqueous battery having moderate adhesion to be used in a nonaqueous battery in which a nonaqueous electrolytic solution is sealed, the laminate for a nonaqueous battery being capable of improving the suitability of electrodes to be packed into a battery case without causing a reduction in battery output, being capable of preventing a short circuit between the electrodes caused by the penetration of a burr or the like present on an electrode plate through a separator, being capable of suppressing the reduction of the adhesion in the nonaqueous electrolytic solution, being capable of suppressing the deterioration of the nonaqueous electrolytic solution, and having such a cohesive strength that when the laminate is used in the form of a tape, a pressure-sensitive adhesive layer does not squeeze out of a base material layer.

A laminate for a nonaqueous battery of the present invention is formed of at least two layers, including:
a base material layer (A); and
a pressure-sensitive adhesive layer (B) in the stated order,
in which:
   the base material layer (A) contains a polyolefin-based thermoplastic resin; and
   the pressure-sensitive adhesive layer (B) contains an α -olefin-based thermoplastic resin, wherein the polyolefin-based thermoplastic resin is a polypropylene having a melting point of 120°C or more.

In a preferred embodiment, the α-olefin-based thermoplastic resin includes an amorphous propylene-(1-butene) copolymer.
In a preferred embodiment, the polyolefin-based thermoplastic resin includes at least one kind selected from the group consisting of a polyethylene, a polypropylene, and an olefin-based thermoplastic elastomer (TPO).
In a preferred embodiment, a content of the polyolefin-based thermoplastic resin in the base material layer (A) is 50 wt% to 100 wt%.
In a preferred embodiment, a content of the α-olefin-based thermoplastic resin in the pressure-sensitive adhesive layer (B) is 40 wt% to 100 wt%.
In a preferred embodiment, the base material layer (A) has a thickness of 10 µm to 150 µm.
In a preferred embodiment, the pressure-sensitive adhesive layer (B) has a thickness of 1 µm to 300 µm.
In a preferred embodiment, the laminate for a nonaqueous battery further includes a surface layer (C) on a side of the base material layer (A) opposite to the pressure-sensitive adhesive layer
(B).
In a preferred embodiment, the surface layer (C) contains a releasing agent.

A nonaqueous battery of the present invention includes the laminate for a nonaqueous battery of the present invention.

According to the present invention, it is possible to provide the laminate for a nonaqueous battery having moderate adhesion to be used in a nonaqueous battery in which a nonaqueous electrolytic solution is sealed, the laminate for a nonaqueous battery being capable of improving the suitability of electrodes to be packed into a battery case without causing a reduction in battery output, being capable of preventing a short circuit between the electrodes caused by the penetration of a burr or the like present on an electrode plate through a separator, being capable of suppressing the reduction of the adhesion in the nonaqueous electrolytic solution, being capable of suppressing the deterioration of the nonaqueous electrolytic solution, and having such a cohesive strength that when the laminate is used in the form of a tape, a pressure-sensitive adhesive layer does not squeeze out of a base material layer.

Such effects as described above can be expressed by: adopting such a construction formed of at least two layers that a laminate for a nonaqueous battery has a base material layer (A) and a pressure-sensitive adhesive layer (B) in the stated order; causing the base material layer (A) to contain a polyolefin-based thermoplastic resin; and causing the pressure-sensitive adhesive layer (B) to contain an α-olefin-based thermoplastic resin.

In the accompanying drawings:
FIG. **1** is a schematic sectional view of a laminate for a nonaqueous battery according to a preferred embodiment of the present invention; and
FIG. **2** is a schematic sectional view of the laminate for a nonaqueous battery according to another preferred embodiment of the present invention.

### «A. Laminate for nonaqueous battery»

A laminate for a nonaqueous battery of the present invention has a base material layer (A) and a pressure-sensitive adhesive layer (B) in the stated order. The laminate for a nonaqueous battery of the present invention is formed of at least two layers. The laminate for a nonaqueous battery of the present invention may be constructed only of the base material layer (A) and the pressure-sensitive adhesive layer (B), or may be constructed of the base material layer (A), the pressure-sensitive adhesive layer (B), and any appropriate other layer. For example, the laminate may have any appropriate other pressure-sensitive adhesive layer (B') on the side of the base material layer (A) opposite to the pressure-sensitive adhesive layer (B), or may have any appropriate surface layer (C) on the side of the base material layer (A) opposite to the pressure-sensitive adhesive layer (B).

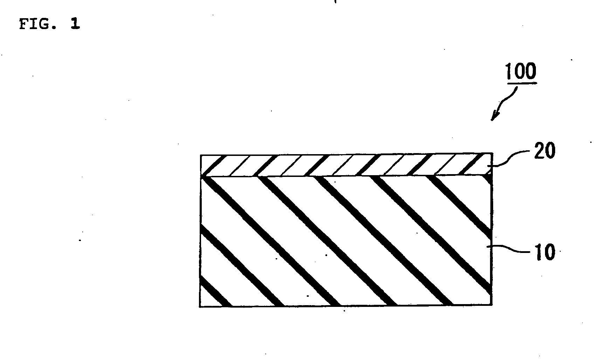

FIG. **1** illustrates a schematic sectional view of a laminate for a nonaqueous battery according to a preferred embodiment of the present invention. FIG. **1** illustrates a laminate **100** for a nonaqueous battery constructed of a base material layer (A) **10** and a pressure-sensitive adhesive layer (B) **20.**

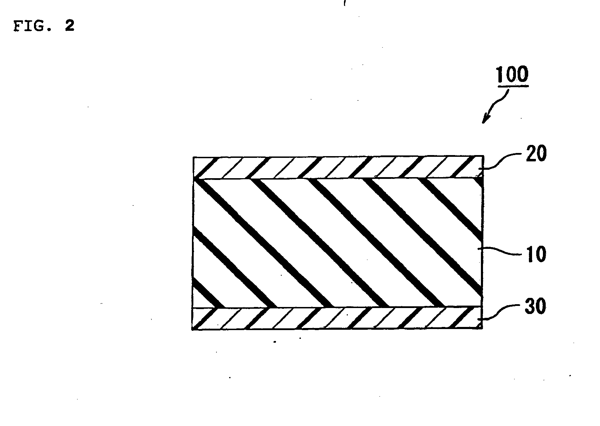

FIG. **2** illustrates a schematic sectional view of the laminate for a nonaqueous battery according to another preferred embodiment of the present invention. FIG. **2** illustrates the laminate **100** for a nonaqueous battery constructed of a laminate having the pressure-sensitive adhesive layer (B) **20,** the base material layer (A) **10,** and a pressure-sensitive adhesive layer (B') **30** in the stated order. The pressure-sensitive adhesive layer (B') **30** may be a pressure-sensitive adhesive layer of the same composition as that of the pressure-sensitive adhesive layer (B) **20,** or may be a pressure-sensitive adhesive layer different in composition from the pressure-sensitive adhesive layer (B) **20.**

### <<A-1. Base material layer (A)>>

The base material layer (A) contains a polypropylene. Examples of the polypropylene include a homopolypropylene, ablockpolypropylene, andarandompolypropylene. The structure of the homopolypropylene is exemplified by isotactic, atactic, and syndiotactic structures.

The polyolefin-based thermoplastic resin is particularly preferably a polypropylene having a melting point of 120°C or more because of, for example, its excellent heat resistance. The use of the polypropylene having a melting point of 120°C or more obviates the risk of the occurrence of a glitch due to melt adhesion even when a heating step at a temperature of 120°C or more is performed upon production of a nonaqueous battery.

The polyolefin-based thermoplastic resins may be included in the base material layer (A) alone or in combination. A combination form in which two or more kinds thereof are included is, for example, blending or copolymerization.

A commercial product may be used as the polyolefin-based thermoplastic resin to be incorporated into the base material layer (A).

The content of the polyolefin-based thermoplastic resin in the base material layer (A) is preferably 50 wt% to 100 wt%, more preferably 70 wt% to 100 wt%, still more preferably 90 wt% to 100 wt%, particularly preferably 95 wt% to 100 wt%, most preferably substantially 100 wt%.

The base material layer (A) can contain any appropriate additive as required. Examples of such additive include a UV absorbing agent, a thermal stabilizer, a filler, a colorant, and a lubricant. The kinds, number, and amount of additives to be incorporated into the base material layer (A) can be appropriately set depending on purposes.

Examples of the UV absorbing agent include a benzotriazole-based compound, a benzophenone-based compound, and a benzoate-based compound. Any appropriate content can be adopted as the content of the UV absorbing agent as long as the UV absorbing agent does not bleed out at the time of the forming of the laminate for a nonaqueous battery. The content of the UV absorbing agent is preferably 0.01 part by weight to 5 parts by weight with respect to 100 parts by weight of the polyolefin-based thermoplastic resin in the base material layer (A).

Examples of the thermal stabilizer include a hindered amine-based compound, a phosphorus-based compound, and a cyanoacrylate-based compound. Any appropriate content can be adopted as the content of the thermal stabilizer as long as the thermal stabilizer does not bleed out at the time of the forming of the laminate for a nonaqueous battery. The content of the thermal stabilizer is preferably 0.01 part by weight to 5 parts by weight with respect to 100 parts by weight of the polyolefin-based thermoplastic resin in the base material layer (A).

Examples of the filler include inorganic fillers such as talc, titanium oxide, calcium carbonate, clay, mica, barium sulfate, whisker, and magnesium hydroxide. The filler preferably has an average particle diameter of 0.1 µm to 10 µm. The content of the filler is preferably 1 part by weight to 200 parts by weight with respect to 100 parts by weight of the polyolefin-based thermoplastic resin in the base material layer (A).

Examples of the colorant include an organic colorant and an inorganic colorant. The content of the colorant is preferably 1 part by weight to 20 parts by weight with respect to 100 parts by weight of the polyolefin-based thermoplastic resin in the base material layer (A).

Any appropriate thickness can be adopted as the thickness of the base material layer (A) depending on intended uses. The thickness of the base material layer (A) is preferably 10 µm to 150 µm, more preferably 20 µm to 100 µm.

### <<A-2. Pressure-sensitive adhesive layer (B)>>

The pressure-sensitive adhesive layer (B) contains an α -olefin-based thermoplastic resin. When the pressure-sensitive adhesive layer (B) contains the α-olefin-based thermoplastic resin, the following laminate for a nonaqueous battery having moderate adhesion can be effectively provided. The laminate can improve the suitability of electrodes to be packed into a battery case without causing a reduction in battery output, can prevent a short circuit between the electrodes caused by the penetration of a burr or the like present on an electrode plate through a separator, can suppress the reduction of the adhesion in a nonaqueous electrolytic solution, can suppress the deterioration of the nonaqueous electrolytic solution, and has such a cohesive strength that when the laminate is used in the form of a tape, the pressure-sensitive adhesive layer does not squeeze out of the base material layer.

The α-olefin-based thermoplastic resins may be included in the pressure-sensitive adhesive layer (B) alone or in combination. A combination form in which two or more kinds thereof are included is, for example, blending or copolymerization.

Any appropriate α-olefin-based thermoplastic resin can be adopted as the α-olefin-based thermoplastic resin as long as the resin can be formed into a film by melt extrusion. The term "α-olefin-based thermoplastic resin" refers to a thermoplastic resin obtained by using monomer components containing at least one kind of α-olefin. Such α-olefin-based thermoplastic resin is preferably, for example, an amorphous propylene-(1-butene) copolymer. Here, the term "amorphous" as used in the specification refers to such property that the copolymer has no distinct melting point unlike a crystalline material.

When the amorphous propylene- (1-butene) copolymer is used as the α-olefin-based thermoplastic resin to be incorporated into the pressure-sensitive adhesive layer (B), the pressure-sensitive adhesive layer (B) has moderate adhesion and the reduction of the adhesion in a nonaqueous electrolytic solution can be additionally suppressed. In addition, the deterioration of the nonaqueous electrolytic solution due to a reaction between a component for constructing the pressure-sensitive adhesive layer (B) and an electrode or the like can be additionally suppressed because the component is hardly eluted in the nonaqueous electrolytic solution. Thus, good charge and discharge characteristics are obtained.

The amorphous propylene-(1-butene) copolymer can be preferably obtained by copolymerizing propylene and 1-butene with a metallocene catalyst. The amorphous propylene-(1-butene) copolymer obtained by the copolymerization with the metallocene catalyst shows a narrow molecular weight distribution (of, for example, 2 or less). The use of the amorphous propylene- (1-butene) copolymer showing such narrow molecular weight distribution can prevent the outflow of a low-molecular weight component into the nonaqueous electrolytic solution due to bleeding.

The content of a constituent unit derived from propylene in the amorphous propylene-(1-butene) copolymer is preferably 80 mol% to 99 mol%, more preferably 85 mol% to 99 mol%, still more preferably 90 mol% to 99 mol%. As long as the content of the constituent unit derived from propylene in the amorphous propylene-(1-butene) copolymer falls within such range, the pressure-sensitive adhesive layer (B) having an excellent balance between its toughness and flexibility can be obtained, and hence the effects of the present invention can be expressed in an additionally effective fashion.

The content of a constituent unit derived from 1-butene in the amorphous propylene-(1-butene) copolymer is preferably 1 mol% to 15 mol%, more preferably 1 mol% to 10 mol%. As long as the content of the constituent unit derived from 1-butene in the amorphous propylene-(1-butene) copolymer falls within such range, the pressure-sensitive adhesive layer (B) having an excellent balance between its toughness and flexibility can be obtained, and hence the effects of the present invention can be expressed in an additionally effective fashion.

Any appropriate copolymer structure can be adopted as the copolymer structure of the amorphous propylene- (1-butene) copolymer. Examples of such copolymer structure include a block copolymer and a random copolymer.

The amorphous propylene-(1-butene) copolymer has a weight-average molecular weight (Mw) of preferably 200, 000 or more, more preferably 200, 000 to 500, 000, still more preferably 200, 000 to 300,000. As long as the weight-average molecular weight (Mw) of the amorphous propylene-(1-butene) copolymer falls within such range, the pressure-sensitive adhesive layer (B) having moderate adhesion can be obtained, and hence the effects of the present invention can be expressed in an additionally effective fashion.

The content of the α-olefin-based thermoplastic resin in the pressure-sensitive adhesive layer (B) is preferably 40 wt% to 100 wt%, more preferably 50 wt% to 90 wt%, still more preferably 60 wt% to 85 wt%. As long as the content of the α-olefin-based thermoplastic resin in the pressure-sensitive adhesive layer (B) falls within such range, the following laminate for a nonaqueous battery having moderate adhesion can be provided in an additionally effective fashion. The laminate can improve the suitability of electrodes to be packed into a battery case without causing a reduction in battery output, can prevent a short circuit between the electrodes caused by the penetration of a burr or the like present on an electrode plate through a separator, can suppress the reduction of the adhesion in a nonaqueous electrolytic solution, can suppress the deterioration of the nonaqueous electrolytic solution, and has such a cohesive strength that when the laminate is used in the form of a tape, the pressure-sensitive adhesive layer does not squeeze out of the base material layer.

When the pressure-sensitive adhesive layer (B) contains the amorphous propylene-(1-butene) copolymer, the pressure-sensitive adhesive layer (B) may further contain a crystalline polypropylene-based resin in order that the adhesion of the pressure-sensitive adhesive layer (B) (which ends up in the adhesion of the laminate for a nonaqueous battery of the present invention) may be adjusted. When the pressure-sensitive adhesive layer (B) contains the crystalline polypropylene-based resin, the adhesion of the pressure-sensitive adhesive layer (B) can be moderately reduced and its storage modulus can be increased. When the pressure-sensitive adhesive layer (B) further contains the crystalline polypropylene-based resin, the content of the crystalline polypropylene-based resin in the pressure-sensitive adhesive layer (B) can be set to any appropriate content depending on desired adhesion and a desired storage modulus. The content of such crystalline polypropylene-based resin is preferably 0 wt% to 50 wt%, more preferably 0 wt% to 40 wt%, still more preferably 0 wt% to 30 wt% with respect to the total weight of the amorphous propylene-(1-butene) copolymer and the crystalline polypropylene-based resin.

The pressure-sensitive adhesive layer (B) can contain any other component as required. Examples of the other component include: a softener; a tackifier; an antioxidant; an olefin-based resin; a silicone-based resin; a liquid acrylic copolymer; polyethyleneimine; a fatty acid amide; a phosphoric acid ester; a hindered amine-based light stabilizer; a UV absorbing agent; a thermal stabilizer; fillers and pigments such as calcium oxide, magnesium oxide, silica, zinc oxide, and titanium oxide; and other additives.

The tackifier is effective in improving the adhesion. When the pressure-sensitive adhesive layer (B) contains the tackifier, the content of the tackifier in the pressure-sensitive adhesive layer (B) can be set to any appropriate content in consideration of the prevention of the occurrence of an adhesive residue due to a reduction in cohesive strength and an improvement in electrical stability in the nonaqueous electrolytic solution. The content of the tackifier in the pressure-sensitive adhesive layer (B) is preferably 10 wt% to 100 wt%, more preferably 20 wt% to 90 wt%, still more preferably 20 wt% to 70 wt%.

Examples of the tackifier include petroleum-based resins such as an aliphatic copolymer, an aromatic copolymer, an aliphatic-aromatic copolymer system, and an alicyclic copolymer, coumarone-indene-based resins, terpene-based resins, terpene phenol-based resins, rosin-based resins such as polymerized rosin, (alkyl) phenol-based resins, xylene-based resins, and hydrogenated products thereof. The tackifiers in the pressure-sensitive adhesive layer (B) may be used alone or in combination.

A hydrogenated tackifier such as an "ARKON P-125" manufactured by ARAKAWA CHEMICAL INDUSTRIES, LTD. is preferred as the tackifier in terms of, for example, releasability and weatherability. It should be noted that the tackifier may be a product commercially available as a blend with an olefin resin or with a thermoplastic elastomer.

The softening agent is effective in improving the adhesion. When the pressure-sensitive adhesive layer (B) contains the softening agent, any appropriate content can be adopted as the content of the softening agent in the pressure-sensitive adhesive layer (B). The content of the softening agent in the pressure-sensitive adhesive layer (B) is preferably 40 wt% or less, more preferably 20 wt% or less, still more preferably 10 wt% or less because the amount of an adhesive residue at a high temperature or at the time of outdoor exposure tends to increase when the content of the softening agent in the pressure-sensitive adhesive layer (B) becomes excessively large.

Examples of the softening agent include a low-molecular weight diene-based polymer, a polyisobutylene, a hydrogenated polyisoprene, a hydrogenated polybutadiene, and derivatives thereof. Examples of the derivatives include derivatives each having an OH group or a COOH group at one, or each of both, of its terminals. Specific examples thereof include a hydrogenated polybutadiene diol, a hydrogenated polybutadiene monool, a hydrogenated polyisoprene diol, and a hydrogenated polyisoprene monool. A hydrogenated product of a diene-based polymer such as a hydrogenated polybutadiene or a hydrogenated polyisoprene, an olefin-based softening agent, or the like is preferred in order that the improvement of the adhesion may be additionally suppressed. A "Kuraprene LIR-200" manufactured by KURARAY CO. , LTD. is given as a specific example of such preferred softening agent. The softening agents in the pressure-sensitive adhesive layer (B) may be used alone or in combination.

The molecular weight of the softening agent can be set to any appropriate value. An excessively small molecular weight of the softening agent may be responsible for the transfer of a substance from the pressure-sensitive adhesive layer to an adherend, the contamination of the nonaqueous electrolytic solution, or the like. On the other hand, an excessively large molecular weight of the softening agent tends to result in a poor improving effect on the adhesive strength of the layer. Accordingly, the number-average molecular weight of the softening agent is preferably 5,000 to 100,000, more preferably 10,000 to 50,000.

The pressure-sensitive adhesive layer (B) may be subjected to a surface treatment as required. Examples of the surface treatment include a corona discharge treatment, a UV irradiation treatment, a flame treatment, a plasma treatment, and a sputter etching treatment.

Any appropriate thickness can be adopted as the thickness of the pressure-sensitive adhesive layer (B) depending on intended uses. The thickness of the pressure-sensitive adhesive layer (B) is preferably 1 µm to 300 µm, more preferably 4 µm to 100 µm, still more preferably 5 µm to 50 µm.

It is preferred that the pressure-sensitive adhesive layer (B) be substantially free of F⁻, Cl⁻, Br⁻, NO₂⁻, NO₃⁻, SO₄²⁻ , Li⁺, Na⁺, K⁺, Mg²⁺, Ca²⁺, and NH₄⁺. This is because of the following reason. As a result of the absence of any charge transfer substance in the nonaqueous electrolytic solution, charge transfer can be inhibited, and hence reductions in charge and discharge characteristics can be prevented. The pressure-sensitive adhesive layer (B) substantially free of any such ion as described above can be obtained by subjecting the α-olefin-based thermoplastic resin (preferably the amorphous propylene-(1-butene) copolymer) to be incorporated into the pressure-sensitive adhesive layer (B) to solution polymerization with a metallocene catalyst. The solution polymerization with the metallocene catalyst involves depositing and isolating a polymer with a poor solvent different from a polymerization solvent (reprecipitation method) in the step of isolating and purifying the polymer. The pressure-sensitive adhesive layer (B) free of any such ion as described above can be obtained by repeatedly performing the reprecipitation method in the isolating and purifying step.

The pressure-sensitive adhesive layer (B) has an adhesive strength for a stainless-steel plate measured in conformity with JIS Z 0237 (2000) of preferably 0.2 N/20 mm to 10.0 N/20 mm, more preferably 1.0 N/20 mm to 5.0 N/20 mm, still more preferably 1.5 N/20 mm to 2.5 N/20 mm. When the adhesive strength for the stainless-steel plate measured in conformity with JIS Z 0237 (2000) is less than 0.2 N/20 mm, the adhesion may be excessively weak. When the adhesive strength for the stainless-steel plate measured in conformity with JIS Z 0237 (2000) is larger than 10.0 N/20 mm, there is a possibility that the laminate cannot be released after having been attached.

Thepressure-sensitiveadhesivelayer (B) has a storage modulus (G') of preferably 0.5×10⁶ Pa to 1.0×10⁸ Pa, more preferably 0.8×10⁶ Pa to 3.0×10⁷ Pa. As long as the storage modulus (G') of the pressure-sensitive adhesive layer (B) falls within such range, a laminate for a nonaqueous battery capable of achieving compatibility between sufficient adhesion for an adherend having unevenness on its surface and moderate releasability can be obtained. The storage modulus (G') of the pressure-sensitive adhesive layer (B) can be controlled by, for example, adjusting a content ratio between the amorphous propylene-(1-butene) copolymer and the crystalline polypropylene-based resin. It should be noted that the storage modulus (G') in the present invention can be measured by dynamic viscoelasticity spectral measurement.

### <<A-3. Surface layer (C)>>

The laminate for a nonaqueous battery of the present invention may have the surface layer (C) on the side of the base material layer (A) opposite to the pressure-sensitive adhesive layer (B).

In, for example, the case where the laminate for a nonaqueous battery of the present invention is stored in a roll shape, the surface layer (C) is laminated on the pressure-sensitive adhesive layer (B). Therefore, the surface layer (C) is requested to have good releasability from the pressure-sensitive adhesive layer (B), and the surface layer (C) preferably contains a releasing agent. When the surface layer (C) contains the releasing agent, attachment between the surface layer (C) and the pressure-sensitive adhesive layer (B) in a state in which parts of the laminate for a nonaqueous battery of the present invention overlap each other such as the storage of the laminate for a nonaqueous battery in a roll shape can be prevented. In addition, there is no need to cover the surface layer (C) with a separator layer.

When the surface layer (C) is formed by co-extrusion, a long-chain alkyl-based releasing agent can be preferably adopted as the releasing agent.

The long-chain alkyl-based releasing agent contains a long-chain alkyl-based polymer. The long-chain alkyl-based polymer can be obtained by causing a polymer having a reactive group and a compound having an al kyl group capable of reacting with the reactive group to react with each other in any appropriate heated solvent. A catalyst may be used as required at the time of the reaction. Examples of the catalyst include a tin compound and a tertiary amine.

Examples of the reactive group include a hydroxyl group, an amino group, a carboxyl group, andamaleicanhydridegroup. Examples of the polymer having the reactive group include an ethylene-vinyl alcohol copolymer, a polyvinyl alcohol, a polyethyleneimine, a polyethyleneamine, and a styrene-maleic anhydride copolymer. Of those, an ethylene-vinyl alcohol copolymer is preferred. It should be noted that the concept of the ethylene-vinyl alcohol copolymer comprehends a partially saponified product of an ethylene-vinyl acetate copolymer as well. The concept of the polyvinyl alcohol comprehends a partially saponified product of a polyvinyl acetate as well.

The alkyl group has preferably 8 to 30, more preferably 12 to 22 carbon atoms. As long as the number of carbon atoms of the alkyl group falls within such range, the surface layer (C) having excellent releasability can be obtained. Specific examples of such alkyl group include a lauryl group, a stearyl group, and a behenyl group. Examples of the compound having such alkyl group (i.e., compound having an alkyl group capable of reacting with the reactive group) include isocyanates such as octyl isocyanate, decyl isocyanate, lauryl isocyanate, and stearyl isocyanate, an acid chloride, an amine, and an alcohol. Of those, isocyanates are preferred.

The long-chain alkyl-based polymer has a weight-average molecular weight of preferably 10, 000 to 1, 000, 000, more preferably 20, 000 to 1, 000, 000. As long as the weight-average molecular weight of the long-chain alkyl-based polymer falls within such range, the surface layer (C) having excellent releasability can be obtained.

The content of the long-chain alkyl-based releasing agent in the surface layer (C) is preferably 1 wt% to 50 wt%, more preferably 2 wt% to 30 wt%, particularly preferably 5 wt% to 20 wt%. When the content is smaller than 1 wt%, an effect of the addition of the long-chain alkyl-based releasing agent may not be obtained. When the content is larger than 50 wt%, a bled product may be produced.

The surface layer (C) can contain any appropriate resin component for the formation of the layer. Any appropriate thermoplastic resin is given as an example of such resin component.

When the surface layer (C) is formed by application, a long-chain alkyl-based releasing agent, a fluorine-containing long-chain alkyl-based releasing agent, a silicone-based releasing agent, or the like can be adopted as the releasing agent. The silicone-based releasing agent is of, for example, any one of the following types. The releasing agent is an addition reaction-type thermosetting releasing agent or a condensation reaction-type thermosetting releasing agent, or is curable with a radiation such as UV light or an electron beam.

The surface layer (C) can contain any appropriate additive as required.

### «B. Method of producing laminate for nonaqueous battery of the present invention»

The laminate for a nonaqueous battery of the present invention can be produced by any appropriate production method. Examples of the method of producing the laminate for a nonaqueous battery of the present invention include a method including the step of subjecting at least two formation materials including a formation material (a) for the base material layer (A) and a formation material (b) for the pressure-sensitive adhesive layer (B) to co-extrusion, and a method including the step of applying an application liquid containing the formation material (b) for the pressure-sensitive adhesive layer (B) to the surface of the base material layer (A) prepared in advance. Alternatively, the pressure-sensitive adhesive layer (B) can be formed by adding a cross-linking agent to the formation material (b) for the pressure-sensitive adhesive layer (B) and cross-linking the material under heat to cure the material.

Any appropriate method can be adopted as a method for the application. Themethodfortheapplicationis, for example, a method involving using any appropriate applyingmachine such as a bar coater, a gravure coater, a spin coater, a roll coater, a knife coater, or an applicator.

Any appropriate solvent can be selected as a solvent upon preparation of the application liquid containing the formation material (b) for the pressure-sensitive adhesive layer (B). Examples of such solvent include: aromatic hydrocarbon-based solvents such as toluene and xylene; aliphatic carboxylate-based solvents such as ethyl acetate; and aliphatic hydrocarbon-based solvents such as hexane, heptane, and octane. Such solvents may be used alone or in combination.

When the pressure-sensitive adhesive layer (B) is formed by the application, the surface of the base material layer (A) may be subjected to an easy-adhesion treatment for the purpose of improving adhesiveness between the base material layer (A) and the pressure-sensitive adhesive layer (B). Examples of the easy-adhesion treatment include a corona discharge treatment, an ITRO treatment, and an anchor coat treatment.

The method of producing the laminate for a nonaqueous battery of the present invention preferably includes the step of subjecting at least two formation materials including the formation material (a) for the base material layer (A) and the formation material (b) for the pressure-sensitive adhesive layer (B) to co-extrusion. The production of the laminate for a nonaqueous battery of the present invention by the forming method based on co-extrusion can express, for example, such an effect that the number of production steps can be reduced and such an effect that there is no need to use the solvent to be required upon application.

Any appropriate method can be adopted as the forming method based on co-extrusion. Examples of the method include a T-die extrusion molding method and an inflation molding method. Each of those forming methods involves laminating thermally molten resins in a die with an extruder to form a plurality of layers. Any appropriate condition can be adopted as a forming condition in any such forming method.

When the surface layer (C) is provided on the side of the base material layer (A) opposite to the pressure-sensitive adhesive layer (B) in the method of producing the laminate for a nonaqueous battery of the present invention, the layer may be provided by subjecting a formation material (c) for forming the surface layer (C) to co-extrusion together with the other formation materials to be subjected to co-extrusion, or may be provided by applying an application liquid containing the formation material (c) for forming the surface layer (C).

### <<B-1. Formation material (a) for base material layer (A)>>

The formation material (a) for the base material layer (A) contains a polyolefin-based thermoplastic resin. The description of the polyolefin-based thermoplastic resin in the section A-1 is applicable to such polyolefin-based thermoplastic resin.

The formation material (a) for the base material layer (A) can contain any appropriate additive as required. The description of the additive in the section A-1 is applicable to such additive.

### <<B-2. Formation material (b) for pressure-sensitive adhesive layer (B)>>

The formation material (b) for the pressure-sensitive adhesive layer (B) contains an appropriate α-olefin-based thermoplastic resin. The description of the α-olefin-based thermoplastic resin in the section A-2 is applicable to such α-olefin-based thermoplastic resin.

The formation material (b) for the pressure-sensitive adhesive layer (B) can contain any other component as required. The description of the other component in the section A-2 is applicable to the other component.

The pressure-sensitive adhesive layer (B) obtained from the formation material (b) may be subjected to a surface treatment as required. The description of the surface treatment in the section A-2 is applicable to the surface treatment.

The formation material (b) for the pressure-sensitive adhesive layer (B) has a melt flow rate at 230°C and 2.16 kgf of preferably 1 g/10 min to 50 g/10 min, more preferably 5 g/10 min to 30 g/10 min, still more preferably 5 g/10 min to 20 g/10 min. As long as the melt flow rate of the formation material (b) for the pressure-sensitive adhesive layer (B) falls within such range, the pressure-sensitive adhesive layer (B) having a uniform thickness can be formed without any processing failure by, for example, forming based on co-extrusion. The melt flow rate can be measured by a method in conformity with JIS K 7210.

### <<B-3. Formation material (c) for surface layer (C)>>

When the surface layer (C) is provided on the side of the base material layer (A) opposite to the pressure-sensitive adhesive layer (B) in the method of producing the laminate for a nonaqueous battery of the present invention, the layer may be provided by subjecting the formation material (c) for forming the surface layer (C) to co-extrusion together with the other formation materials to be subjected to co-extrusion, or may be provided by applying an application liquid containing the formation material (c) for forming the surface layer (C).

In, for example, the case where the laminate for a nonaqueous battery of the present invention is stored in a roll shape, the surface layer (C) is laminated on the pressure-sensitive adhesive layer (B). Therefore, the surface layer (C) is requested to have good releasability from the pressure-sensitive adhesive layer (B), and the formation material (c) preferably contains a releasing agent. When the formation material (c) for forming the surface layer (C) contains the releasing agent, attachment between the surface layer (C) and the pressure-sensitive adhesive layer (B) in a state in which parts of the laminate for a nonaqueous battery of the present invention overlap each other such as the storage of the laminate for a nonaqueous battery in a roll shape can be prevented. In addition, there is no need to cover the surface layer (C) with a separator layer.

When the surface layer (C) is formed by co-extrusion, a long-chain alkyl-based releasing agent can be preferably adopted as a releasing agent.

The description of the long-chain alkyl-based releasing agent in the section A-3 is applicable to the long-chain alkyl-based releasing agent.

The formation material (c) for forming the surface layer (C) can contain any appropriate resin component for the formation of the layer. A thermoplastic resin is given as an example of such resin component.

When the surface layer (C) is formed by application, a long-chain alkyl-based releasing agent, a fluorine-containing long-chain alkyl-based releasing agent, a silicone-based releasing agent, or the like can be adopted as the releasing agent. The silicone-based releasing agent is of, for example, any one of the following types. The releasing agent is an addition reaction-type thermosetting releasing agent or a condensation reaction-type thermosetting releasing agent, or is curable with a radiation such as UV light or an electron beam.

The surface layer (C) can contain any appropriate additive as required. For example, the additive described in the section A-1 can be used as the additive that can be incorporated into the surface layer (C).

Hereinafter, the present invention is specifically described by way of examples. However, the present invention is by no means limited to these examples. It should be noted that test and evaluation methods in the examples and the like are as described below. In addition, the term "part (s) " means "part (s) by weight."

### «Evaluation for preventing property against squeeze-out of adhesive»

The resultant laminate for a nonaqueous battery (having a width of 10 mm and a length of 100 mm) was brought into pressure contact with a metal SUS plate with a heat pressing machine (available under the trade name "TP-701-B Heat Seal Tester (upper and lower thermal control type)" from TESTER SANGYO CO., LTD.) under the following conditions, and then the presence or absence of the squeeze-out of an adhesive from an end of the laminate for a nonaqueous battery was observed with an optical microscope (available under the trade name "Digital Microscope VHX-100" from KEYENCE CORPORATION). The case where the squeeze-out of the adhesive was absent was marked with Symbol "o", and the case where the squeeze-out of the adhesive was present was marked with Symbol "×". In addition, when the squeeze-out of the adhesive was present, squeeze-out distances were measured, and then the maximum out of the measured values was defined as the adhesive squeeze-out distance (mm) of the laminate for a nonaqueous battery.

### Measurement conditions

| | |
|---|---|
| Temperature: | 150°C |
| Pressure: | 0.5 MPa |
| Compression time: | 3 minutes |

### «Holding power test»

The resultant laminate for a nonaqueous battery (having a width of 10 mm and a length of 100 mm) was evaluated for its holding power through the measurement of its shift distance (mm) with a creep tester (available under the trade name "Tape Creep Tester" from IMADA SEISAKUSHO CO., LTD.) under the following conditions. As the shift distance becomes shorter, the holding power becomes more excellent.

| | |
|---|---|
| Temperature: | 40°C |
| Load: | 600 gf |
| Holding area: | 10 mm wide by 20 mm long |
| Holding time: | 1 hour |

### «Evaluation for adhesive strength for aluminum foil at time of pressure contact at 25°C»

The resultant laminate for a nonaqueous battery was brought into pressure contact with an aluminum foil by applying a pressure of 2 kgf/cm² at normal temperature (25°C) for 2 seconds. Thus, a test body was obtained.
The resultant test body was subjected to the measurement of a strength (180° peeling adhesion (for the aluminum foil)) (N/10 mm) needed upon release of the laminate for a nonaqueous battery and the aluminum foil at normal temperature (25°C), a release rate of 300 mm/min, and a release angle of 180° with a precision universal tester (available under the trade name "AutographAG-I" from Shimadzu Corporation). The strength was defined as an adhesive strength for the aluminum foil at the time of the pressure contact at 25°C.

### «Evaluation for adhesive strength for aluminum foil at time of pressure contact under heat»

The resultant laminate for a nonaqueous battery was brought into pressure contact with an aluminum foil by applying a pressure of 2. 0 kgf/cm² at 130°C for 1 second. Thus, a test body was obtained.
The resultant test body was subjected to the measurement of a strength (180° peeling adhesion (for the aluminum foil)) (N/10 mm) needed upon release of the laminate for a nonaqueous battery and the aluminum foil at normal temperature (25°C), a release rate of 300 mm/min, and a release angle of 180° with a precision universal tester (available under the trade name "Autograph AG-I" fromShimadzu Corporation). The strength was defined as an adhesive strength for the aluminum foil at the time of the pressure contact under heat.

### «Evaluation for adhesive strength for aluminum foil after immersion in nonaqueous electrolytic solution»

The test body obtained in the section "evaluation for adhesive strength for aluminum foil at time of pressure contact at 25°C" or "evaluation for adhesive strength for aluminum foil at time of pressure contact under heat" was immersed in a nonaqueous electrolytic solution, which had been prepared by mixing ethylene carbonate and diethyl carbonate at a weight ratio of 1:1, at 80°C for 48 hours. After that, the test body lifted from the nonaqueous electrolytic solution was subjected to the measurement of a strength (180° peeling adhesion (for the aluminum foil)) (N/10 mm) needed upon release of the laminate for a nonaqueous battery and the aluminum foil by the same method as that described above. The strength was defined as an adhesive strength for the aluminum foil after the immersion in the nonaqueous electrolytic solution.

### «Assembly of lithium ion secondary battery»

### (Positive electrode plate)

85 Parts by weight of lithium cobaltate (available under the trade name "CELLSEED C-10" from NIPPON CHEMICAL INDUSTRIAL CO., LTD.) as a positive electrode active substance, 10 parts by weight of acetylene black (available under the trade name "DENKABLACK" from DENKI KAGAKU KOGYO KABUSHIKI KAISHA) as a conductive assistant, and 5 parts by weight of a vinylidene fluoride resin (available under the trade name "KUREHA KF POLYMER L #1120" from KUREHA CORPORATION) as a binder were mixed, and then the mixture was turned into slurry with N-methyl-2-pyrrolidone so that its non-volatile matter concentration was 15 wt%.
The slurry was applied onto an aluminum foil (collector) having a thickness of 20 µm so that its thickness was 200 µm. After that, the resultant coating film was dried at 80°C for 1 hour and then at 120°C for an additional two hours. After that, the resultant was pressurized with a roll press. Thus, a sheet whose positive electrode active substance layer had a thickness of 100 µm was prepared.
A positive electrode sheet whose positive electrode active substance portion measured 27 mm on a side and which had a tabbing portion was produced with the sheet. Next, the tabbing portion of the positive electrode sheet was subjected to spot welding with an aluminum tab so that a flag-type positive electrode sheet was obtained. The laminate for a nonaqueous battery was attached to a boundary between a portion where the positive electrode active substance layer was applied and a portion where the layer was not applied so as to lie on the positive electrode active substance layer.

### (Negative electrode plate)

80 Parts by weight of mesocarbon microbeads (available under the trade name "MCMB 6-28 " from Osaka Gas Chemical Co., Ltd.) as a negative electrode active substance, 10 parts by weight of acetylene black (available under the trade name "DENKABLACK" from DENKI KAGAKU KOGYO KABUSHIKI KAISHA) as a conductive assistant, and 10 parts by weight of a vinylidene fluoride resin (available under the trade name "KUREHA KF POLYMER L #1120" from KUREHA CORPORATION) as a binder were mixed, and then the mixture was turned into slurry with N-methyl-2-pyrrolidone so that its non-volatile matter concentration was 15 wt%.
The slurry was applied onto a copper foil (collector) having a thickness of 20 µm so that its thickness was 200 µm. After that, the resultant coating film was dried at 80°C for 1 hour and then at 120°C for an additional two hours. After that, the resultant was pressurized with a roll press. Thus, a sheet whose negative electrode active substance layer had a thickness of 100 µm was prepared.
A negative electrode sheet whose negative electrode active substance portion measured 29 mm on a side and which had a tabbing portion was produced with the sheet. Next, the tabbing portion of the negative electrode sheet was subjected to spot welding with a nickel tab so that a flag-type negative electrode sheet was obtained.

### (Separator)

A polypropylene porous film (trade name: "Celgard 2400," manufactured by Polypore K.K., thickness: 25 µm, porosity: 41%) was used as a separator.

### (Battery production)

The positive electrode sheet, the separator, and the negative electrode sheet were laminated in the stated order. The resultant laminate was stored in an aluminum laminate package. Further, an electrolytic solution prepared by dissolving lithium hexafluorophosphate (LiPF₆) in a mixed solvent of ethylene carbonate and diethyl carbonate (volume ratio: 1/2) at a concentration of 1. 4 mol/L was injected into the package. Next, the package was sealed. Thus, a lithium ion secondary battery was assembled.

### «Evaluation for workability»

An evaluation for workability upon assembly of the lithium ion secondary battery by the method was performed by the following criteria.
o: Even when the side of the laminate for a nonaqueous battery is directed vertically downward after the laminate for a nonaqueous battery has been attached, the laminate does not fall. In addition, the laminate can be released and attached again after having been attached.
× : When the side of the laminate for a nonaqueous battery is directed vertically downward after the laminate for a nonaqueous battery has been attached, the laminate falls. Alternatively, the laminate cannot be released and attached again after having been attached.

### «Evaluation for preventing property against deterioration of nonaqueous electrolytic solution»

The lithium ion secondary battery assembled as described above was charged at a constant current of 0.2 CmA and a constant voltage of 4.2 V. After that, the battery was loaded into an oven at 80°C for 20 days while a connection between its electrodes was opened. After that, a variation (V) in the voltage of the battery was measured, and then an evaluation for preventing property against the deterioration of the nonaqueous electrolytic solution was performed by verifying a voltage maintenance ratio as compared with a reference battery to which the laminate for a nonaqueous battery was not attached.

### (Example 1)

A block PP (PC480A manufactured by SunAllomer Ltd., MFR=1.7 (230°C, 2.16 kgf)) to serve as a base material layer and an α -olefin-based pressure-sensitive adhesive (Tafthren H5002 manufactured by Sumitomo Chemical Company, Limited) to serve as a pressure-sensitive adhesive layer were loaded into an extruder, and were then subjected to melt extrusion by inflation molding. Thus, a laminate (1) for a nonaqueous battery (thickness: base material layer/pressure-sensitive adhesive layer=30 µm/10 µm) was produced.
Table 1 shows the results of the evaluations.

### [0093] (Example 2)

A block PP (PC480A manufactured by SunAllomer Ltd., MFR=1.7 (230°C, 2.16 kgf)) to serve as a base material layer and a product to serve as a pressure-sensitive adhesive layer obtained by blending 100 parts by weight of an α-olefin-based pressure-sensitive adhesive (Tafthren H5002 manufactured by Sumitomo Chemical Company, Limited) with 30 parts by weight of a tackifier "ARKON P-125" manufactured by ARAKAWA CHEMICAL INDUSTRIES, LTD. were loaded into an extruder, and were then subjected to melt extrusion by inflation molding. Thus, a laminate (2) for a nonaqueous battery (thickness: base material layer/pressure-sensitive adhesive layer=30 µm/8 µm) was produced.
Table 1 shows the results of the evaluations.

### (Example 3)

A block PP (PC480A manufactured by SunAllomer Ltd., MFR=1.7 (230°C, 2.16 kgf)) to serve as a base material layer and a product to serve as a pressure-sensitive adhesive layer obtained by blending 100 parts by weight of an α-olefin-based pressure-sensitive adhesive (Tafthren H5002 manufactured by Sumitomo Chemical Company, Limited) with 15 parts by weight of a tackifier "ARKON P-125" manufactured by ARAKAWA CHEMICAL INDUSTRIES, LTD. were loaded into an extruder, and were then subjected to melt extrusion by inflation molding. Thus, a laminate (3) for a nonaqueous battery (thickness: base material layer/pressure-sensitive adhesive layer=30 µm/8 µm) was produced.
Table 1 shows the results of the evaluations.

### (Example 4)

A block PP (PC480A manufactured by SunAllomer Ltd., MFR=1.7 (230°C, 2.16 kgf)) to serve as a base material layer and a product to serve as a pressure-sensitive adhesive layer obtained by blending 100 parts by weight of an α-olefin-based pressure-sensitive adhesive (Tafthren H5002 manufactured by Sumitomo Chemical Company, Limited) with 20 parts by weight of a tackifier "ARKON P-125" manufactured by ARAKAWA CHEMICAL INDUSTRIES, LTD. were loaded into an extruder, and were then subjected to melt extrusion by inflation molding. Thus, a laminate (4) for a nonaqueous battery (thickness: base material layer/pressure-sensitive adhesive layer=30 µm/8 µm) was produced.
Table 1 shows the results of the evaluations.

### (Example 5)

A block PP (PC480A manufactured by SunAllomer Ltd., MFR=1.7 (230°C, 2.16 kgf)) to serve as a base material layer, a product to serve as a pressure-sensitive adhesive layer obtained by blending 100 parts by weight of an α-olefin-based pressure-sensitive adhesive (Tafthren H5002 manufactured by Sumitomo Chemical Company, Limited) with 30 parts by weight of a tackifier "ARKON P-125" manufactured by ARAKAWA CHEMICAL INDUSTRIES, LTD., and a product to come on the surface opposite to the pressure-sensitive adhesive layer with respect to the base material layer as a central layer obtained by blending an LDPE (NOVATEC LD LC720 manufactured by Japan Polyethylene Corporation, MFR=9.4 (190°C, 2.16 kgf)) with a long-chain alkyl-based releasing agent (ASHIO RESIN RA95HS manufactured by Ashio-Sangyo Corporation) (completely saponified polyvinyl octadecyl carbamate-based releasing agent) for imparting releasability so that the releasing agent accounted for 9 wt% of the entirety were loaded into an extruder, and were then subjected to melt extrusion by inflation molding. Thus, a laminate (5) for a nonaqueous battery (thickness: release layer/base material layer/pressure-sensitive adhesive layer=2 µm/28 µm/8 µm) was produced.
Table 1 shows the results of the evaluations.

### (Comparative Example 1)

100 Parts by weight of an acrylic copolymer using 2-ethylhexyl acrylate, ethylacrylate,and hydroxyethylacrylate (polymerization ratio: 50 parts by weight/50 parts by weight/5 parts by weight) as constituent monomers and 2 parts by weight of an isocyanate-based cross-linking agent (available under the trade name "CORONATE L" from Nippon Polyurethane Industry Co., Ltd.) were diluted with toluene so that a non-volatile matter concentration was 20 wt%. Thus, a coating liquid (1) was obtained. The resultant coating liquid (1) was applied to the entire surface of a polypropylene film having a thickness of 30 µm so that its thickness after drying was 10 µm, and was then dried. Thus, a laminate (C1) for a nonaqueous battery was obtained.
Table 2 shows the results of the evaluations.

### (Comparative Example 2)

A laminate (C2) for a nonaqueous battery was obtained in the same manner as in Comparative Example 1 except that the coating liquid (1) was applied to the entire surface of a polyimide film having a thickness of 30 µm.
Table 2 shows the results of the evaluations.

### (Comparative Example 3)

A laminate (C3) for a nonaqueous battery was obtained in the same manner as in Comparative Example 1 except that the coating liquid (1) was applied to the entire surface of a polyester film having a thickness of 30 µm.
Table 2 shows the results of the evaluations.

### (Comparative Example 4)

100 Parts by weight of a polyisobutylene rubber (available under the trade name "Oppanol B200" from BASF Japan) were diluted with toluene. Thus, a coating liquid (2) was obtained. The resultant coating liquid (2) was applied to the entire surface of a polypropylene film having a thickness of 30 µm so that its thickness after drying was 10 µm, and was then dried. Thus, a laminate (C4) for a nonaqueous battery was obtained.
Table 2 shows the results of the evaluations.

### (Comparative Example 5)

100 Parts by weight of a masticated natural rubber, 60 parts by weight of an aliphatic hydrocarbon-based petroleum resin (available under the trade name "Escolets 1304" from TONEX Co., Ltd.), and 20 parts by weight of a phenol resin (available under the trade name "RESITOP PS4609" from Gun Ei Chemical Industry Co. , Ltd.) were diluted with toluene. Thus, a coating liquid (3) was obtained. The resultant coating liquid (3) was applied to the entire surface of a polypropylene film having a thickness of 30 µm so that its thickness after drying was 10 µm, and was then dried. Thus, a laminate (C5) for a nonaqueous battery was obtained.
Table 2 shows the results of the evaluations.

### (Comparative Example 6)

A maleic acid-modified polyolefin (available under the trade name "ARONMELT PPET1600" from Toagosei Company, Limited) was diluted with toluene so that a non-volatile matter concentration was 20 wt%. Thus, a coating liquid (4) was obtained. The resultant coating liquid (4) was applied to the entire surface of a polypropylene film having a thickness of 30 µm so that its thickness after drying was 10 µm, and was then dried. Thus, a laminate (C6) for a nonaqueous battery was obtained.
Table 2 shows the results of the evaluations.

**[Table 1]**

| | Preventing property against squeeze-out of adhesive | Holding power (mm) | Adhesive strength for aluminum foil at time of pressure contact at 25°C (N/10 mm) | Adhesive strength for aluminum foil at time of pressure contact under heat (N/10 mm) | Adhesive strength for aluminum foil after immersion in nonaqueous electrolytic solution (N/10 mm) | Workability | Preventing property against deterioration of nonaqueous electrolytic solution (%) |
|---|---|---|---|---|---|---|---|
| Example 1 | **○** | 0 | 0.50 | 0.72 | 0.50 | ○ | 100 |
| Example 2 | **○** | 0 | 1.67 | 2.38 | 1.67 | ○ | 100 |
| Example 3 | **○** | 0 | 1.05 | 1.51 | 1.12 | ○ | 100 |
| Example 4 | **○** | 0 | 1.25 | 1.82 | 1.33 | ○ | 100 |
| Example 5 | **○** | 0 | 1.58 | 2.21 | 1.57 | ○ | 100 |

**[Table 2]**

| | Preventing property against squeeze-out of adhesive (adhesive squeeze-out distance) | Holding power (mm) | Adhesive strength for aluminum foil at time of pressure contact at 25°C (N/10 mm) | Adhesive strength for aluminum foil at time of pressure contact under heat (N/10 mm) | Adhesive strength for aluminum foil after immersion in nonaqueous electrolytic solution (M/10 mm) | workability | Preventing property against deterioration of nonaqueous electrolytic solution (%) |
|---|---|---|---|---|---|---|---|
| Comparative Example 1 | × (1.7 mm) | 0.02 | 3.82 | 5.21 | 0.03 | × | 62 |
| Comparative Example 2 | × (1.9 mm) | 0.01 | 2.13 | 4.21 | 0.03 | × | 58 |
| Comparative Example 3 | × (1.8 mm) | 0.02 | 2.43 | 3.23 | 0.03 | × | 60 |
| Comparative Example 4 | × (4.3 mm) | 1.2 | 0.53 | 0.53 | 0.53 | ○ | 98 |
| Comparative Example 5 | × (3.2 mm) | 1.4 | 1.71 | 0.01 | 0.01 | ○ | 28 |
| Comparative Example 6 | × (0.3 mm) | 0.01 | 0.81 | 0.81 | 0.81 | × | 72 |

It is found that according to the present invention, as shown in Table 1, the laminate for a nonaqueous battery in which the nonaqueous electrolytic solution is sealed expresses the following effects by: adopting such a construction formed of at least two layers that the laminate has the base material layer (A) and the pressure-sensitive adhesive layer (B) in the stated order; causing the base material layer (A) to contain a polyolefin-based thermoplastic resin; and causing the pressure-sensitive adhesive layer (B) to contain an α-olefin-based thermoplastic resin. The laminate can improve the suitability of electrodes to be packed into a battery case without causing a reduction in battery output, can prevent a short circuit between the electrodes caused by the penetration of a burr or the like present on an electrode plate through a separator, can suppress the reduction of the adhesion in the nonaqueous electrolytic solution, can suppress the deterioration of the nonaqueous electrolytic solution, has such a cohesive strength that when the laminate is used in the form of a tape, the pressure-sensitive adhesive layer does not squeeze out of the base material layer, and has moderate adhesion.

The laminate for a nonaqueous battery of the present invention can be used for a site to be immersed in an electrolytic solution in a nonaqueous battery, a site to be brought into contact the electrolytic solution, or the like.

## Claims

1. A laminate for a nonaqueous battery formed of at least two layers, comprising:
a base material layer (A); and
a pressure-sensitive adhesive layer (B) in the stated order,
wherein:
the base material layer (A) contains a polyolefin-based thermoplastic resin; and
the pressure-sensitive adhesive layer (B) contains an α-olefin-based thermoplastic resin,
wherein the polyolefin - based thermoplastic resin is a polypropylene having a melting point of 120°C or more.

2. A laminate for a nonaqueous battery according to claim 1, wherein the α-olefin-based thermoplastic resin comprises an amorphous propylene-(1-butene) copolymer.

3. A laminate for a nonaqueous battery according to claim 1 or 2, wherein a content of the polyolefin-based thermoplastic resin in the base material layer (A) is 50 wt% to 100 wt%.

4. A laminate for a nonaqueous battery according to anyone of claims 1 to 3, wherein a content of the α-olefin-based thermoplastic resin in the pressure-sensitive adhesive layer (B) is 40 wt% to 100 wt%.

5. A laminate for a nonaqueous battery according to anyone of claims 1 to 4, wherein the base material layer (A) has a thickness of 10 µm to 150 µm.

6. A laminate for a nonaqueous battery according to anyone of claims 1 to 5, wherein the pressure-sensitive adhesive layer (B) has a thickness of 1 µm to 300 µm.

7. A laminate for a nonaqueous battery according to anyone of claims 1 to 6, further comprising a surface layer (C) on a side of the base material layer (A) opposite to the pressure-sensitive adhesive layer (B).

8. A laminate for a nonaqueous battery according to claim 7, wherein the surface layer (C) contains a releasing agent.

9. A nonaqueous battery, comprising the laminate for a nonaqueous battery according to any one of claims 1 to 8.

## Patentansprüche

1. Laminat für eine nichtwässrige Batterie, das aus mindestens zwei Schichten gebildet ist, umfassend:
eine Basismaterialschicht (A); und
eine druckempfindliche Haftmittelschicht (B) in der genannten Reihenfolge,
wobei:
die Basismaterialschicht (A) ein Polyolefin-basiertes thermoplastisches Harz enthält; und
die druckempfindliche Haftmittelschicht (B) ein α-Olefin-basiertes thermoplastisches Harz enthält,
wobei das Polyolefin-basierte thermoplastische Harz ein Polypropylen ist, das einen Schmelzpunkt von 120°C oder höher aufweist.

2. Laminat für eine nichtwässrige Batterie nach Anspruch 1, wobei das α-Olefinbasierte thermoplastische Harz ein amorphes Propylen-(1-buten)-Copoylmer umfasst.

3. Laminat für eine nichtwässrige Batterie nach Anspruch 1 oder 2, wobei ein Anteil des Polyolefin-basierten thermoplastischen Harzes in der Basismaterialschicht (A) 50 Gew.-% bis 100 Gew.-% beträgt.

4. Laminat für eine nichtwässrige Batterie nach einem der Ansprüche 1 bis 3, wobei ein Anteil des α-Olefin-basierten thermoplastischen Harzes in der druckempfindlichen Haftmittelschicht (B) 40 Gew.-% bis 100 Gew.-% beträgt.

5. Laminat für eine nichtwässrige Batterie nach einem der Ansprüche 1 bis 4, wobei die Basismaterialschicht (A) eine Dicke von 10 µm bis 150 µm aufweist.

6. Laminat für eine nichtwässrige Batterie nach einem der Ansprüche 1 bis 5, wobei die druckempfindliche Haftmittelschicht (B) eine Dicke von 1 µm bis 300 µm aufweist.

7. Laminat für eine nichtwässrige Batterie nach einem der Ansprüche 1 bis 6, weiter umfassend eine Oberflächenschicht (C) auf einer Seite der Basismaterialschicht (A) gegenüber der druckempfindlichen Haftmittelschicht (B).

8. Laminat für eine nichtwässrige Batterie nach Anspruch 7, wobei die Oberflächenschicht (C) ein Trennmittel enthält.

9. Nichtwässrige Batterie, umfassend das Laminat für eine nichtwässrige Batterie nach einem der Ansprüche 1 bis 8.

## Revendications

1. Un stratifié pour une batterie non aqueuse formé d'au moins deux couches, comprenant :
une couche de matière de base (A) ; et
une couche adhésive sensible à la pression (B) dans l'ordre indiqué, où :
la couche de matière de base (A) contient une résine thermoplastique à base de polyoléfine ; et
la couche adhésive sensible à la pression (B) contient une résine thermoplastique à base d'α-oléfine,
où la résine thermoplastique à base de polyoléfine est un polypropylène ayant un point de fusion de 120°C ou plus.

2. Un stratifié pour une batterie non aqueuse selon la revendication 1, où la résine thermoplastique à base d'α-oléfine comprend un copolymère amorphe de propylène-(1-butène).

3. Un stratifié pour une batterie non aqueuse selon la revendication 1 ou 2, où la teneur en résine thermoplastique à base de polyoléfine dans la couche de matière de base (A) est de 50% à 100% en masse.

4. Un stratifié pour une batterie non aqueuse selon l'une quelconque des revendications 1 à 3, où la teneur en résine thermoplastique à base d'α-oléfine dans la couche adhésive sensible à la pression (B) est de 40% à 100% en masse.

5. Un stratifié pour une batterie non aqueuse selon l'une quelconque des revendications 1 à 4, où la couche de matière de base (A) a une épaisseur de 10 µm à 150 µm.

6. Un stratifié pour une batterie non aqueuse selon l'une quelconque des revendications 1 à 5, où la couche adhésive sensible à la pression (B) a une épaisseur de 1 µm à 300 µm.

7. Un stratifié pour une batterie non aqueuse selon l'une quelconque des revendications 1 à 6, comprenant en outre une couche de surface (C) sur un côté de la couche de matière de base (A) à l'opposé de la couche adhésive sensible à la pression (B).

8. Un stratifié pour une batterie non aqueuse selon la revendication 7, où la couche de surface (C) contient un agent de détachement.

9. Une batterie non aqueuse, comprenant le stratifié pour une batterie non aqueuse selon l'une quelconque des revendications 1 à 8.
